(19) Europäisches Patentamt
European Patent Office
Office européen des brevets

(11) Veröffentlichungsnummer: **0 036 446**
**A1**

# (12) EUROPÄISCHE PATENTANMELDUNG

(21) Anmeldenummer: **80107683.7**

(22) Anmeldetag: **06.12.80**

(51) Int. Cl.³: **B 32 B 27/28**, B 32 B 27/08

(30) Priorität: **15.03.80 DE 3010143**

(43) Veröffentlichungstag der Anmeldung: **30.09.81**
**Patentblatt 81/39**

(84) Benannte Vertragsstaaten: **FR GB IT NL SE**

(71) Anmelder: **Messerschmitt-Bölkow-Blohm Gesellschaft mit beschränkter Haftung, Postfach 801109, D-8000 München 80 (DE)**
Anmelder: **BAYER AG, Zentralbereich Patente, Marken und Lizenzen, D-5090 Leverkusen 1, Bayerwerk (DE)**

(72) Erfinder: **Egert, Karl-Heinz, Hellasweg 11 a, D-2000 Hamburg 54 (DE)**
Erfinder: **Wank, Joachim, Zülpicher Strasse 7, D-4047 Dormagen-Zons (DE)**
Erfinder: **Reese, Eckart, Dr., Aggerstrasse 22, D-4047 Dormagen (DE)**

## (54) Kunststoffverbundlaminat, seine Herstellung und seine Verwendung.

(57) Für ein Kunststoffverbundlaminat, welches vorzugsweise als Dekorelement z. B. im Fahrzeug-, Flugzeug- oder Schiffsbau angewendet werden kann, besteht die Erfindung darin, daß es aus einer Folie aus aromatischem, thermoplastischem Polycarbonat und/oder aus thermoplastischem Polyarylsulfon und aus einer Folie aus einem thermoplastischem Copolymerisat besteht.

EP 0 036 446 A1

Messerschmitt-Bölkow-Blohm GmbH

8000 München 80, 14.03.80
BT01 Hi/bk - 8709 -

0036446

BAYER AKTIENGESELLSCHAFT

5090 Leverkusen, Bayerwerk
PS/bc/c

Zentralbereich
Patente, Marken und Lizenzen

# Kunststoffverbundlaminat, seine Herstellung und seine Verwendung

Gegenstand der vorliegenden Erfindung ist ein Kunststoffverbundlaminat bestehend aus

1. einer Folie aus aromatischem thermoplastischem Polycarbonat und/oder aus thermoplastischem Polyarylsulfon,

2. einem Polyurethankleber und

3. einer Folie aus einem thermoplastischen Copolymerisat aus 40 bis 60 Mol-% Ethylen, 40 bis 60 Mol-% Tetrafluorethylen und zusätzlich bis zu 10 Mol-%, bezogen jeweils auf die 100 Mol-% der Summe aus Ethylen und Tetrafluorethylen, eines ganz oder partiell fluorierten Vinylalkylethers oder eines ganz oder partiell fluorierten Vinylalkans.

Als Kunststoffverbundlaminate im Sinne vorliegender Erfindung sind flächige geschichtete Gebilde von 0,05 bis 5 mm Dicke zu verstehen.



BAD ORIGINAL

Die erfindungsgemäß zu verwendenden aromatischen thermoplastischen Polycarbonate sind bekannt (s. H. Schnell, "Chemistry an Physics of Polycarbonates", Interscience Publishers, New York, 1964). Folien aus Polycarbonat sind ebenfalls bekannt.

Zur Herstellung der erfindungsgemäßen Polycarbonatfolien geeignete thermoplastische aromatische Polycarbonate können Gewichtsmittelmolekulargewichte zwischen 25 000 und 200 000, vorzugsweise zwischen 30 000 und 120 000 und insbesondere zwischen 30 000 und 80 000 haben. (Mw wurde ermittelt durch Messung von $\eta_{rel}$ in $CH_2Cl_2$ bei 20°C und einer Konzentration von 0,5 Gew.-%).

Erfindungsgemäß geeignete thermoplastische aromatische Polycarbonate sind insbesondere die Homopolycarbonate aus 2,2-Bis-(4-hydroxyphenyl)-propan (Bisphenol A), sowie die Copolycarbonate aus Bisphenol A und bis zu 10 Mol-%, bezogen auf Mole Bisphenol A, aus anderen Diphenolen und/ oder bis zu 0,5 Mol-%, bezogen auf Bisphenol A, aus verzweigenden Komponenten mit mindestens drei Verzweigungsstellen, beispielsweise Trisphenolen oder Tetraphenolen.

Als "andere Diphenole" sind andere Bis-(hydroxyaryl)-$C_1$-$C_8$-alkane als Bisphenol A sowie insbesondere Bis-(hydroxyaryl)-$C_5$-$C_6$-cycloalkane geeignet.

Geeignete andere Diphenole sind beispielsweise Bis-(4-hydroxyphenyl)-methan (Bisphenol F),
2,4-Bis-(4-hydroxyphenyl)-2-methylbutan,
2,2-Bis-(3-methyl-4-hydroxyphenyl)-propan,



BAD ORIGINAL

Bis-(3,5-dimethyl-4-hydroxyphenyl)-methan, 2,2-Bis-(3,5-dimethyl-4-hydroxyphenyl)-propan, 2,4-Bis-(3,5-dimethyl-4-hydroxyphenyl)-2-methylbutan, 1,1-Bis-(4-hydroxyphenyl)-cyclohexan und 1,1-Bis-(3,5-dimethyl-4-hydroxyphenyl)-cyclohexan.

Geeignete verzweigende Komponenten sind beispielsweise Phloroglucin, 1,3,5-Tris-(4-hydroxyphenyl)-benzol und 1,1,1-Tris-(4-hydroxyphenyl)-ethan, 3,3-Bis-(4-hydroxyphenyl)-2-oxo-2,3-dihydroindol (Isatinbisphenol), 3,3-Bis-(4-hydroxy-3-methyl-phenyl)-2-oxo-2,3-dihydroindol (Isatin-bis-o-kresol), 2,2-Bis-[4,4-bis-(4-hydroxyphenyl)-cyclohexyl]-propan, Tetra-(4-hydroxyphenyl)methan, Tetra-(4-(4-hydroxyphenyl-isopropyl)-phenoxy)-methan und 1,4-Bis-((4',4"-dihydroxy-triphenyl)-methyl)-benzol. Vorzugsweise geeignete verzweigende Komponenten sind Isatin-bisphenol, Isatin-bis-o-kresol und 1,4-Bis-((4',4"-dihydroxytriphenyl)-methyl)-benzol.

Erfindungsgemäß bevorzugte geeignete Polycarbonate sind die Copolycarbonate aus 99 bis 90 Mol-% aus 2,2-Bis-(4-hydroxyphenyl)-propan und 1 bis 10 Mol-% 1,1-Bis-(4-hydroxyphenyl)-cyclohexan.

Als verzweigte Polycarbonate sind insbesondere die der DT-OS 2 254 917 (Le A 14 719), der DT-OS 2 500 092 (Le A 16 142), der DT-OS 2 113 347 (Le A 13 638) und der DT-OS 2 254 918 (Le A 14 711) geeignet, vorzugsweise die der DT-OS 2 500 092 (Le A 16 142) und der DT-OS 2 113 347 (Le A 13 638).



BAD ORIGINAL

Bevorzugte Polycarbonatfolien sind solche, die in üblicher Weise schwer brennbar gemacht sind, insbesondere durch den Zusatz von halogenhaltigen, niedermolekularen aromatischen Polycarbonaten mit mittleren Molekulargewichten $\bar{M}n$ (Zahlenmittel) von 4000 bis 20 000, vorzugsweise 8000 bis 12 000 auf Basis von halogenierten Diphenolen, wie beispielsweise von 2,2-Bis-(3,5-dibrom-4-hydroxyphenyl)-propan oder 2,2-Bis-(3,5-dichlor-4-hydroxy-phenyl)-propan, gemäß DE-OS 2 354 533 (Le A 15 318) bzw. gemäß DE-OS 2 243 226, oder insbesondere durch den Zusatz von $NH_4$-, Alkali- oder Erdalkalisalzen von Perhalogenalkansulfonsäuren, wie beispielsweise solchen der Formel I

$$R\text{-}SO_3\text{-}Me \qquad (I),$$

worin

R für $C_nHal_{2n+1}$ mit Hal F oder Cl, vorzugsweise F und n 1 bis 8 steht und

Me für $NH_4$, Alkali, wie beispielsweise Lithium, Natrium oder Kalium, oder Erdalkali wie beispielsweise Magnesium, Calcium, Strontium oder Barium steht, insbesondere steht Me für Kalium.

Nähere Einzelheiten über die letztgenannten schwer brennbaren Polycarbonatfolien sind der DE-OS 2 706 126 (Le A 17 729) zu entnehmen.

Die erfindungsgemäß zu verwendenden Polyarylsulfone sind ebenfalls bekannt. Sie können linear (s. DE-OS 2 735 144 (Le A 18 261)) oder verzweigt sein (s. DE-OS 2 735 092 (Le A 18 262) bzw. DE-OS 2 305 413 (Le A 14 799)).



BAD ORIGINAL

Geeignete lineare Polyarylsulfone sind alle bekannten aromatischen Polysulfone oder Polyethersulfone mit $\bar{M}w$ (Gewichtsmittelmolekulargewicht gemessen beispielsweise mittels Lichtstreuung) zwischen etwa 15 000 und etwa 55 000, vorzugsweise zwischen etwa 20 000 und etwa 40 000. Derartige Polyarylsulfone sind beispielsweise in DE-OS 1 719 244 bzw. US-PS 3 365 517 beschrieben.

Vorzugsweise geeignete Polyarylsulfone sind die aus Bisphenolen und Dihalogenarylsulfonen erhältlichen der nachfolgenden Struktureinheiten der Formel (II)

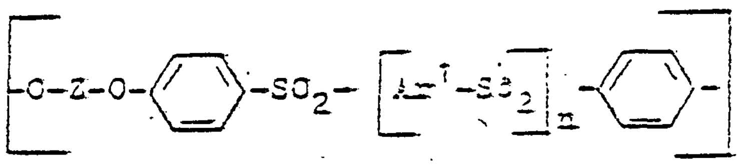

(II)

worin

$Ar^1$ einen Biphenylen- oder Oxibiphenylen-Rest,

n 0 oder 1,

Z einen p-Phenylenrest, m-Phenylenrest oder zweibindigen Rest der folgenden Formel (III)

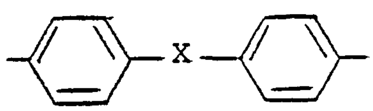

(III)

entspricht,

worin

X einen zweiwertigen $C_1$-$C_{12}$-Alkylen- bzw. -Alkyliden-Rest, $C_5$-$C_{12}$-Cycloalkylen- bzw. -Cycloalkylidenrest, $C_7$-$C_{12}$-Aralkylen- bzw. -Aralkyliden-Rest oder $C_8$-$C_{12}$-Arylen-bisalkyliden-Rest oder die Gruppierung



BAD ORIGINAL

-O-, -S-, -SO-, $-SO_2-$, -CO- oder eine einfache Bindung bedeutet.

Geeignete verzweigte Polyarylsulfone sind insbesondere die verzweigten Polyarylethersulfone gemäß DE-OS 2 305 413 bzw. US-PS 3 960 815, deren $\bar{M}w$ (Gewichtsmittelmolekulargewicht, gemessen beispielsweise mittels Lichtstreuung) zwischen etwa 15 000 und etwa 50 000, vorzugsweise zwischen etwa 20 000 und 40 000 liegen.

Geeignete Kleber auf Polyurethanbasis sind insbesondere thermisch stabile Kleber, die beispielsweise während der thermischen Verformung der Folien infolge Vernetzung eine große Stabilität erreichen.

Geeignete Kleber auf Polyurethanbasis sind beispielsweise Umsetzungsprodukte von

1. Polyestern mit Diisocyanaten, wobei

1.1 Polyester aus Dicarbonsäuren mit 5 bis 30 C-Atomen, bevorzugt aus Adipinsäure, und Diolen mit 2 bis 20 C-Atomen, bevorzugt Diethylenglykol, nach bekannten Verfahren hergestellt sind, und

1.2 diese Polyester mit Diisocyanaten, bevorzugt 4,4'-Diisocyanatodiphenylmethan, zu entsprechenden Polyurethanen in bekannter Weise umgesetzt werden, und wobei

1.3 die Umsetzung so erfolgt, daß die erhaltenen Polyurethane



BAD ORIGINAL

1.3.1 einen freien NCO-Gehalt von 0,5 bis 10 Gew.-%, bevorzugt 0,5 bis 5 Gew.-% aufweisen, oder

1.3.2 einen OH-Gehalt von 0,5 bis 15 Gew.-%, bevorzugt 0,5 bis 5 Gew.-% besitzen,

oder Umsetzungsprodukte von

2. Polyethern mit Diisocyanaten, wobei

2.1 ein bevorzugter Polyether Polypropylenoxid ist, und

2.2 diese Polyether in bekannter Weise mit den unter 1.2 genannten Diisocyanaten umgesetzt werden, und die Umsetzung so erfolgt, daß entweder

2.3 Polyurethane mit einem freien NCO-Gehalt von 0,5 bis 10 Gew.-%, bevorzugt 0,5 bis 5 Gew.-% oder

2.4 Polyurethane mit einem freien OH-Gehalt von 0,5 bis 15 Gew.-%, bevorzugt 0,5 bis 5 Gew.-%, erhalten werden.

Die beschriebenen Polyurethankleber können zur Erhöhung der Temperaturbeständigkeit ausgehärtet werden.

Hierzu werden die unter 1.3.1 bzw. 2.3 genannten Polyurethankleber mit Diolen oder aminhaltigen Epoxidharzen und die unter 1.3.2 und 2.4 genannten Polyurethankleber mit Isocyanaten, vorzugsweise Triisocyanaten, in bekannter Weise umgesetzt. Als Triisocyanate sind



BAD ORIGINAL

beispielsweise die durch Umsetzung von 1 Mol Trimethylolpropan mit 3 Mol des Isomerengemisches aus 2,4- bzw. 2,6-Diisocyanatotoluol erhältlichen geeignet.

Copolymerisate aus Ethylen und Tetrafluorethylen und gegebenenfalls Vinylalkylethern oder Vinylalkanen sind ebenfalls bekannt. Die zu verwendenden Copolymerisate sollen mittlere Gewichtsmittelmolekulargewichte $\overline{M}w$ (gemessen nach gelchromatographischen Methoden) zwischen 50 000 und 150 000 haben. Die Anteile an den einzelnen Monomeren im Copolymerisat sollen zwischen 40 und 60 Mol-% an Ethylen, zwischen 60 und 40 Mol-% an Tetrafluorethylen und bis zu 10 Mol-%, bezogen jeweils auf 100 Mol-% der Summe aus Ethylen und Tetrafluorethylen, eines ganz oder partiell fluorierten Vinylalkylethers oder eines ganz oder partiell fluorierten Vinylalkans liegen.

Geeignete fluorierte Vinylalkylether sind Perfluormethyl-vinylether oder Perfluorpropyl-vinylether.

Geeignete fluorierte Vinylalkane sind beispielsweise Hexafluorpropen.

Die Herstellung des erfindungsgemäßen Kunststoffverbundlaminats erfolgt in bekannter Weise beispielsweise dadurch, daß auf die Folien aus aromatischen thermoplastischen Polycarbonaten und/oder thermoplastischen Polyarylsulfonen der Polyurethankleber in bekannter Weise aufgetragen wird und nach Trocknung des Klebers die Folie aus dem thermoplastischen Copolymerisat aus Ethylen, Tetrafluorethylen und der dritten Komponente nach entsprechender üblicher Vorbehandlung aufkaschiert wird.



BAD ORIGINAL

0036446

Die Kunststoffverbundlaminate können auch nach dem Verkleben durch weiteres Aufextrudieren von Polycarbonat verstärkt werden.

Verbundfolien sind im Prinzip bekannt (s. beispielsweise FR-PS 1 359 975).

Die erfindungsgemäßen Kunststoffverbundlaminate haben jedoch ein überraschend gutes Eigenschaftsprofil, denn sie sind leicht druckbar, thermoverformbar bis zu einem Verformungsverhältnis von H/D von 3:1, verschleißfest, schmutzabweisend, leicht zu reinigen, unempfindlich gegen Lösungsmitteleinflüsse an der Oberfläche, schwer entflammbar bzw. selbst verlöschend (Brandtest nach FAR 25-853 Methode a), ohne Abspaltung toxisch wirkender Gase im Brandfalle (gemäß Entwurf ATS 1000.001) und leicht verklebbar mit anderen Konstruktions-Elementen.

Somit ist die Verwendung der erfindungsgemäßen Kunststoffverbundlaminate vorzugsweise als Dekorelemente, beispielsweise im Fahrzeugbau, Flugzeugbau, Schiffsbau oder Schienennetzfahrzeugbau, gegeben.

Gegenstand der vorliegenden Erfindung ist somit auch die Verwendung der erfindungsgemäßen Kunststoffverbundlaminate als Dekorelemente.

Die bisher als Dekorschichten eingesetzten Verbundlaminate sind weder optimal bezüglich Verformbarkeit, noch bezüglich der Gas- oder Rauchentwicklung im Brandfalle.



BAD ORIGINAL

0036446

## Beispiele

### Beispiel 1

Aus einem Polycarbonat aus 2,2-Bis(4-hydroxyphenyl)-propan mit einem $\eta_{rel}$ von 1.42 (gemessen in $CH_2Cl_2$ bei 25°C und einer Konzentration c von 0,5 g/100 ml), mit einem Gehalt von 1 Gew.-% Kaliumperfluorbutansulfonat (gemäß DE-OS 2 706 126) wird eine 300µm dicke Folie auf einer Flachfolienanlage hergestellt. Diese Folie wird auf einer Kaschieranlage mit einem temperaturbeständigen Kleber auf Basis Adipinsäure/Diethylenglykol, 4,4'-Diisocyanatodiphenylmethan (~~Lefiol~~ Liofol UK 3645, 74 %iger Lösung in Ethylacetat, Viskosität 390 $cP_{20}$, NCO-Gehalt 2 Gew.-%) der mit Härter auf Basis eines aminhaltigen Epoxidharzes (Liofol UK 6200, 62 %ige Lösung in Cyclohexan (84,2 %) und Methylethylketon (15,8 %) Viskosität 25 $cP_{20}$) im Verhältnis 10:1 gemischt wurde, und auf eine Viskosität von 25 sec (Fordbecher 4 mm Düse) mit Ethylacetat verdünnt wurde, gestrichen. Der Kleberauftrag erfolgt mit einem Reversrollcoater.

Der auf die Polycarbonatfolie aufgetragene Kleber wird in einem Trockenkanal bei ca. 80°C getrocknet, wobei das Lösungsmittel vollständig entfernt wird. Am Ende des Trockenkanals wird eine einseitig vorbehandelte 100µm dicke Polyolefinfolie ($\overline{M}w$ des Polyolefins 100 000, gemessen mittels Gelchromatographie) aus Ethylen/Tetrafluorethylen- (50 Mol-%/50 Mol-%) Copolymer die 10 Mol-% (bezogen auf 100 Mol-% der Summe aus Ethylen/Tetrafluorethylen) Hexafluorpropen



BAD ORIGINAL

enthält und die auf der vorbehandelten Seite eine Oberflächenspannung von 48 dyn/cm aufweist, zusammen mit der kleberbeschichteten Polycarbonatfolie einer Kaschier-Station zugeführt, wobei die vorbehandelte Seite der Polyolefinfolie mit der kleberbeschichteten Seite der Polycarbonatfolie zusammenläuft und die beiden Folien unter einem Liniendruck von 8 kg/cm bei einer Temperatur von 70°C verpreßt werden und anschließend die erhaltene Verbundfolie aufgewickelt wird. Die Maschinengeschwindigkeit wird auf 25 m/min eingestellt. Diese Verbundfolie kann nach 4 Tagen Lagerung bei 50°C weiterverarbeitet werden. Zur Herstellung von Formteilen wird die Verbundfolie auf einer Vakuum-Thermoformmaschine in an sich bekannter Weise bei Temperaturen zwischen 190 und 220°C verformt, wobei die Folie so eingelegt wird, daß die Polycarbonatseite, die später mit den Konstruktionselementen verbunden werden soll, bei Verwendung von Positiv-Werkzeug zur Werkzeugseite zeigt.

Beispiel 2

Herstellung einer Verbundfolie gemäß Beispiel 1 unter Verwendung einer 100µm dicken Polycarbonatfolie (Polycarbonat des Beispiels 1) und einer 100µm dicken Folie aus Ethylen/Tetrafluorethylen-Copolymer (50 Mol-%/50 Mol-%) mit 10 Mol-%, bezogen auf 100 Mol-% Ethylen/Tetrafluorethylen,Vinylmethylether ($\bar{M}w$ des Copolymerisats 100 000 gemessen mittels Gelchromatographie).

Diese Verbundfolie wird zur Herstellung eines 3 mm dicken Kunststofflaminates in den Walzenspalt einer Polycarbonatplattenanlage einlaufen lassen, wobei die



BAD ORIGINAL

Polycarbonatseite der Verbundfolie mit der noch flüssigen Schmelze des Polycarbonats in Verbindung kommt, sich innig vereint und über eine Chillrollanlage abgezogen wird. Die Dicke des erhaltenen Kunststofflaminates wird durch den Walzenspalt des Walzenabzuges eingestellt. Der so hergestellte Verbund aus 0,2 mm dicker Verbundfolie und 2,8 mm Polycarbonat kann in der im Beispiel 1 beschriebenen Weise verformt werden.

Beispiel 3

Herstellung einer Verbundfolie wie Beispiel 1 mit dem Unterschied, daß als Polyurethankleber ein Polyether-Urethankleber auf Basis Polypropylenoxid mit einem Hydroxylgehalt von 3 bis 4 Gew.-% verwendet wird, der mit einem Katalysator aus einem aromatischen Diisocyanat (beispielsweise 4,4'-Diisocyanatodiphenylmethan, Desmodur KA 8098) im Verhältnis 10:1 vermischt wird.

Beispiel 4

Herstellung einer Verbundfolie wie Beispiel 1, wobei als Polycarbonatfolie (Polycarbonat des Beispiels 1) eine 200µm dicke Polycarbonatfolie mit 1 % Kaliumperfluorbutansulfonat (gemäß DOS 2 706 126) verwendet wird und als partiell fluorierte Polyolefinfolie eine 0,05 mm dicke Ethylen/Tetrafluorethylen-Copolymerfolie (50 Mol-%/50 Mol-%), die 5 % Tetrafluorpropen enthält ($\overline{M}w$ des Copolymerisats 100 000, gemessen mittels Gelchromatographie), verwendet wird. Diese Verbundfolie wird auf der Polycarbonatseite mit einem Dekordruck versehen. Die bedruckte Folie wird auf



BAD ORIGINAL

das Konstruktionselement eines Fensterelementes eines Verkehrsflugzeuges aufgezogen, indem die bedruckte Folie auf einer Thermoformmaschine mit Infrarotstrahlern auf 190 bis 200°C erwärmt wird und die noch plastische Folie auf das Konstruktionselement durch Vakuum aufgesaugt wird. Die Verbindung zwischen Verbundfolie und Konstruktionselement erfolgt mit Hilfe eines Schmelzklebers, der sich auf dem Konstruktionselement befindet.

Beispiel 5

Herstellung einer Verbundfolie gemäß Beispiel 1, jedoch unter Verwendung einer Polyarylsulfonfolie aus Polyarylsulfon ($\bar{M}w$ 50 000, gemessen mittels Lichtzerstreuung), hergestellt in bekannter Weise aus Bisphenol A und 4,4'-Dichlordiphenylsulfon, anstatt einer Polycarbonatfolie.

Beispiel 6

Herstellung einer Verbundfolie gemäß Beispiel 1, jedoch unter Verwendung einer Folie aus einer Mischung aus 70 Gew.-% Polyarylsulfon des Beispiels 5 und Bisphenol-A-Polycarbonat ($\bar{M}w$ 75 000, gemessen mittels Lichtzerstreuung) (gemäß DE-OS 2 735 144 (Le A 18 261)) anstelle einer reinen Polycarbonatfolie, wobei die Polycarbonat-Polyarylsulfon-Mischfolie eine Dicke von 0,3 mm und die Polyolefinfolie eine Dicke von 0,03 mm aufweist.



BAD ORIGINAL

0036446

Patentansprüche

1) Kunststoffverbundlaminat, dadurch gekennzeichnet, daß es aus einer Folie aus aromatischen, thermoplastischen Polycarbonat und/oder aus thermoplastischem Polyarylsulfon, einem Polyurethankleber und einer Folie aus einem thermoplastischen Copolymerisat aus 40 bis 60 Mol-% Ethylen, 40 bis 60 Mol-% Tetrafluorethylen und zusätzlich bis zu 10 Mol-%, bezogen jeweils auf die 100 Mol-% der Summe aus Ethylen und Tetrafluorethylen, eines ganz oder partiell fluorierten Vinylalkylethers oder eines ganz oder partiell fluorierten Vinylalkans besteht.

2) Verfahren zur Herstellung des Kunststoffverbundlaminats des Anspruchs 1, dadurch gekennzeichnet, daß auf die Folien aus den Polycarbonaten und/oder Polyarylsulfonen der Polyurethankleber in bekannter Weise aufgetragen wird und nach Trocknung des Klebers die Folie aus dem thermoplastischen Copolymerisat aus Ethylen, Tetrafluorethylen und der dritten Komponente nach entsprechender üblicher Vorbehandlung aufkaschiert wird.

3) Verwendung der Kunststoffverbundlaminate gemäß Anspruch 1 als Dekorelemente.

Europäisches Patentamt

**EUROPÄISCHER RECHERCHENBERICHT**

0036446

Nummer der Anmeldung
EP 80 10 7683

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | DE - A - 2 354 210 (HOECHST) | |
| A | US - A - 3 622 640 (K.T. GARTY et al.) | |
| A | US - A - 3 579 370 (J.O. PUNDERSON) | |
| A | DE - A - 2 444 516 (PENNWALT CO.) | |
| A | DE - A - 2 037 028 (HOECHST) | |
| P | EP - A - 0 012 434 (HOECHST) | |
| | ---- | |

KLASSIFIKATION DER ANMELDUNG (Int Cl.)

B 32 B 27/28
27/08

RECHERCHIERTE SACHGEBIETE (Int Cl.)

B 32 B

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 03-07-1981 | BLASBAND |

EPA form 1503.1 06.78